# EUROPEAN PATENT APPLICATION

(11) **EP 4 366 132 A1**
(43) Date of publication of application: **08.05.2024**
(21) Application number: 22205827.3
(22) Date of filing: 07.11.2022
(51) Int. Cl.: H02J 50/50

(54) **A SYSTEM FOR OPTIMIZING ENERGY TRANSMISSION AND A METHOD THEREOF**

(71) Applicant: Indian Institute of Technology, Delhi, New Delhi 110016 (IN)
(72) Inventor: CHATTERJEE, Shouri, 110016 New Delhi (IN); GHOSH, Sushmita, 110016 New Delhi (IN); DE, Swades, 110016 New Delhi (IN)
(74) Representative: Schulz Junghans Patentanwälte PartGmbB

(57) **Abstract**

The present disclosure relates to method (1000) and system (100) for optimizing energy transmission comprising source node (100) for transmitting RF signal at first frequency, an intermediate node 200 for routing the RF signal to target node (300), intermediate nodes 200 comprises active antenna (202) for amplifying RF signal for obtaining amplified RF signal, digital phase shifter (208) for adjusting phase of amplified signal for generating amplified phase shifted RF signal according to feedback signal received from the target node (300), and the active antenna 202 is transmitting the amplified phase shifted RF signal to target node (300) for harvesting energy. The phase adjustment at the energy router 200 is based on feedback received from the target node (300), so that the RF signals can be combined in constructive manner at the target node (300) to maximize the energy harvesting efficiency of the target node (300).

## Description

### CROSS-REFERENCE TO RELATED APPLICATIONS AND PRIORITY

The present application does not claim priority from any patent application.

### TECHNICAL FIELD

The present disclosure in general relates to a field of Radio Frequency (RF) energy. More particularly, the present disclosure relates to a system and method for optimizing RF energy transmission.

### BACKGROUND

Protective Radio frequency (RF) energy harvesting mechanism is a potential way to power up small wireless sensor nodes for their uninterrupted sensing operation. In general, energy receiving sensor node is equipped with an RF energy harvester and a rechargeable battery. When the energy stored in the battery is exhausted, the RF energy harvester replenishes the battery by harvesting energy either form RF signals available at the ambient or from some dedicated RF energy sources. Since the ambient energy sources are not available on-demand, a dedicated energy source is required to recharge the nodes on-demand. Among the available on-demand energy sources RF energy transfer (RFET) is the most promising energy replenishment technique due to its flexibility and ability to create beamforming.

Various RF energy transfer mechanisms are disclosed in the existing art. In some RFET model, field nodes are charged from some external sources such as mobile robot that can serve as integrated data collection and energy supply agent. The mobile robot receives data stored in the field sensor node and charges the node by transmitting RF signals.

Another implementation of multi-hop RF energy transfer was disclosed in the art where intermediate nodes are configured as energy relay nodes that generates RF signal using off-the-shelf MICA2 mote, and the relay nodes are also charged using RF energy harvesters. It was experimentally demonstrated that multi-hop energy transfer models can achieve 20-30% gain over direct energy transfer with approximately 1 meter between source node and target node. The range is increased in by introducing a greater number of hops between the dedicated energy source node and end node, however the efficiency reduces.

In an existing art, a channel estimation method based on feedback of the measured power level at the energy harvesting antenna of the energy receiver was proposed, where energy feedback from the energy receiver is used for iteratively determining multiple-input multiple-output (MIMO) channel at energy transmitter by applying cutting-plane method in convex optimization. All antennas are equipped at one single energy transmitter and thus their channels to the energy receiver can be jointly estimated.

Another experiment was performed in the art by considering a multi-hop RFET model to analyse efficiency of RF energy harvester in providing energy to the sensors used in the agricultural domain. An alternative proposal described the RF distribution features in urban and semi-urban areas followed by the practical issues in power management (such as nonlinear battery charging, battery imperfection, circuit power), routing design, security in RF energy harvesting wireless communication networks, etc.

Although various approaches have been developed to achieve beamforming, most of the available solutions still faces challenges of phase correction requirement due to the inherent random phase difference at the source node and relay/sensor node clocks.

### SUMMARY

Before the present method and system for optimizing energy transmission is described, it is to be understood that this application is not limited to the particular apparatus, and methodologies described, as there can be multiple possible embodiments that are not expressly illustrated in the present disclosure. It is also to be understood that the terminology used in the description is to describe the particular versions or embodiments only, and is not intended to limit the scope of the present application. This summary is not intended to identify essential features of the claimed subject matter nor is it intended for use in determining or limiting the scope of the claimed subject matter.

In one implementation, a system for optimizing energy transmission is described. The system comprises of a source node, an intermediate node, a target node. The source node is configured for transmitting RF signal at a first frequency. The intermediate node is configured for routing the RF signal received from the source node to the target node. The intermediate nodes comprise an active antenna, a digital phase shifter 208 and a transmitter. The active antenna is configured for amplifying the RF signal for obtaining an amplified RF signal. The digital phase shifter 208 is configured for adjusting phase of the amplified signal for generating an amplified phase shifted RF signal and the amplified phase shifted RF signal is generated according to a feedback signal received from the target node at a second frequency. The transmitter is configured using active antenna for transmitting the amplified phase shifted RF signal to the target node at the first frequency. The target node is configured for harvesting energy from each of the RF signals received from the source node and the amplified phase shifted RF signal received from the intermediate node.

In another implementation, a method for optimizing energy transmission is described. The method comprising transmitting the RF signal through the source node at the first frequency and routing the RF signal received from the source node to the target node through the intermediate node configured as an energy router. The routing comprises amplifying the RF signal through the active antenna for obtaining the amplified RF signal, adjusting phase of the amplified RF signal through the digital phase shifter 208 for generating the amplified phase shifted RF signal and the amplified phase shifted RF signal is generated according to a feedback signal received from the target node at the second frequency; and transmitting the amplified phase shifted RF signal through the transmitter, comprising the active antenna to the target node. The amplified phase shifted RF signal is used for harvesting energy at the target node.

In another implementation, an energy router for optimizing energy transmission is described. The energy router comprises the intermediate node powered by either a battery or an RF energy harvester. The intermediate node comprising the active antenna configured for receiving RF signal form a source node, amplifying the RF signal for obtaining an amplified RF signal, the digital phase shifter 208 configured for adjusting phase of the amplified signal for generating an amplified phase shifted RF signal and the amplified phase shifted RF signal is generated according to a feedback signal received from the target node at the second frequency, and the transmitter comprising the active antenna configured for transmitting the amplified phase shifted RF signal to the target node. The target node is configured for harvesting energy from each of the RF signals received from the source node and the amplified phase shifted RF signal received from the intermediate node.

### BRIEF DESCRIPTION OF DRAWINGS

The detailed description is described with reference to the accompanying figures. In the figures, the left-most digit(s) of a reference number identifies the figure in which the reference number first appears. The same numbers are used throughout the drawings to refer like features and components.
Figure 1 illustrates an exemplary schematic view of system implemented as a 2-hop Radio Frequency Energy Transfer (RFET) model (100) for optimizing energy transmission, in accordance with an embodiment of the present subject matter.
Figure 2 illustrates a circuit diagram of active antenna (202) used in intermediate node 200 (also referred as energy router) configured in the system as shown in Figure 1, in accordance with an embodiment of the present subject matter.
Figure 3 illustrates a block diagram of the intermediate node (200) (also referred as energy router) powered by a battery (214), in accordance with an embodiment of the present subject matter.
Figure 4 illustrates a block diagram of the intermediate node (200) powered by an RF energy harvester (302) configured in the system (100), in accordance with an embodiment of the present subject matter.
Figure 5 illustrates an exemplary schematic diagram of switched capacitor-based all-pass filter based digital phase shifter (208) configured in the system (100), in accordance with an embodiment of the present subject matter.
Figure 6 illustrates a plot showing variation of gain and phase with the change in duty cycle of the Pulse-Width Modulation (PWM) signal applied at switches (218) connected in series with the capacitors (220), in accordance with an embodiment of the present subject matter.
Figure 7 illustrates an exemplary schematic diagram of active antenna (202) followed by the switched capacitor-based all-pass filter based phase shifter (208) configured in the system (100), in accordance with an embodiment of the present subject matter.
Figure 8 illustrates a plot showing magnitude and phase of reflection coefficient (*S*₁₁) and input impedance (*Z*₁₁) of the circuit shown in Figure 7, in accordance with an embodiment of the present subject matter.
Figure 9 illustrates an exemplary schematic diagram of the target node (300) configured in the system (100), in accordance with an embodiment of the present subject matter.
Figure 10 illustrates a method (1000) for optimizing energy transmission, in accordance with an embodiment of the present subject matter.

### DETAILED DESCRIPTION

Some embodiments of the present disclosure, illustrating all its features, will now be discussed in detail. The words "configured to", "connected to","arranged to" and other forms thereof, are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a", "an" and "the" include plural references unless the context clearly dictates otherwise. The words "harvesting unit", "RF energy harvester", "RF energy harvesting unit" and other forms thereof, are intended to be equivalent in meaning and be open ended in that an item or items following any one of these words is not meant to be an exhaustive listing of such item or items or meant to be limited to only the listed item or items.

Various modifications to the embodiment will be readily apparent to those skilled in the art and the generic principles herein may be applied to other embodiments. However, one of ordinary skill in the art will readily recognize that the present disclosure for stripping objects is not intended to be limited to the embodiments illustrated but is to be accorded the widest scope consistent with the principles and features described herein.

The existing methods and systems for Radio Frequency (RF) transmission require an internal clock or oscillator. When the intermediate node transmits energy to the target node, the intermediate node has its own oscillator to radiate the energy at a frequency at which source node is supposed to radiate.

The present subject matter overcomes the problems involved in the existing system and method for optimizing energy transmission. Proposed system comprises a source node, an intermediate node acting as an energy router and a target node.

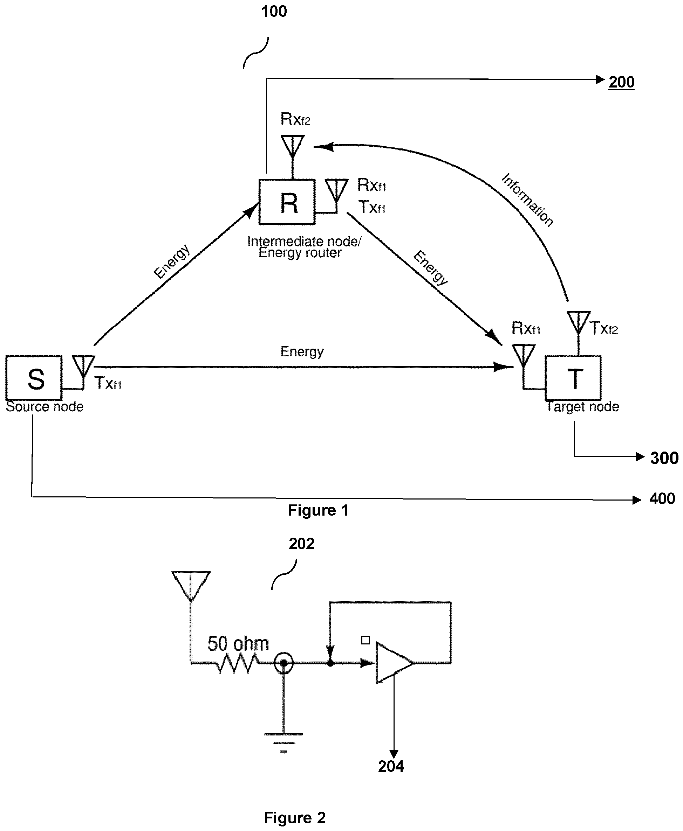

Referring now to the drawings, and more particularly to Figures 1 through 10, where similar reference characters denote corresponding features consistently throughout the figures, there are shown embodiments.

In accordance with an embodiment, referring to Figure 1, an exemplary schematic view of a system 100 for optimizing energy transmission is illustrated. The system 100 is implemented as a 2-hop Radio Frequency Energy Frequency Energy Transfer (RFET) model. The system 100 includes a source node 400, an intermediate node 200 and a target node 300. The source node 400 is configured for transmitting Radio Frequency (RF) signal at first frequency. The source node 400 comprises a mobile agent which periodically travels and transmits energy to recharge the target node 300 or the mobile agent may be available on-demand.

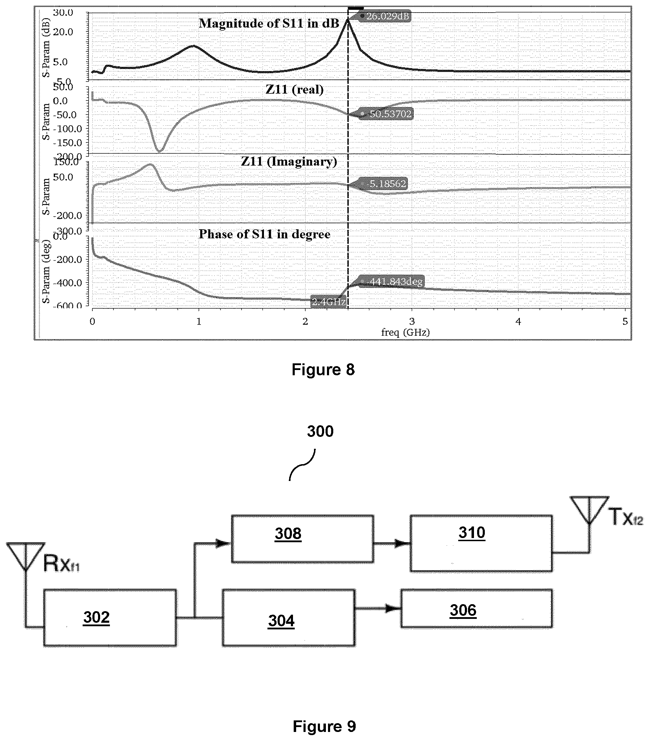

In an embodiment, the source node 400 comprises a part of communication network which is a stable source of energy. The objective is to replenish the battery or the energy storage unit 304 (shown later in Figure 9) of the target node 300 by harvesting energy from RF signal in a shortest-possible time.

The target node 300 is configured for harvesting energy from each of the RF signals received from the source node 400 and the amplified phase shifted RF signal received from the intermediate node 200.

The intermediate node 200 is configured as the energy router and hence is also referred as the energy router at few places in the description in a similar context. The intermediate node 200 is configured for routing the RF signal received from the source node 400 to the target node 300.

Referring to Figure 2, Figure 3 and Figure 4 in combination, the intermediate node 200 comprises an active antenna 202, a digital phase shifter 208, a receiver unit 212, an accumulator 210, and a Sigma-Delta Modulator (SDM) 206. The active antenna 202 receives the RF signal from the source node (400) and transmits the amplified phase shifted RF signal to the target node (300). Thus, the active antenna (202) acts as both receiver and transmitter.

In an embodiment, the intermediate node 200 is powered through an external energy source. The external energy source comprises a battery. The intermediate node 200 continuously transmits RF signal until the battery 214 is completely drained.

In another embodiment, the intermediate node 200 is powered by an RF energy harvesting unit 226. The signal transmission depends on the harvested power, if the intermediate node 200 is powered by the RF energy harvesting unit 226. If the energy consumption of the intermediate node 200 is higher than the harvested energy, the intermediate node 200 needs to be operated in ON-OFF manner. When the energy level of the rechargeable battery connected at the energy storage unit 228 of the intermediate node falls below a threshold level, the active antenna 202 part of the intermediate node 200 is turned OFF, however, the RF energy harvesting unit 226 of the intermediate node 200 remains active. When the battery is replenished up to a threshold level, the active antenna 202 is turned ON and continues to transmit amplified signal to the target node 300. The entire system 100 is powered by the source node 400 only and extra source of energy is not required to power the intermediate node 200. The threshold level depends on normal voltage of the battery used, operating range of other modules in the system 100, and/or so on.

In an embodiment, the energy router 200 may be used as a crystal-free amplify- and-forward information (also referred as data) router for beamformed information (also referred as data) reception at the target node 300 and then the target node 300 acts as an information (also referred as data) receiving node.

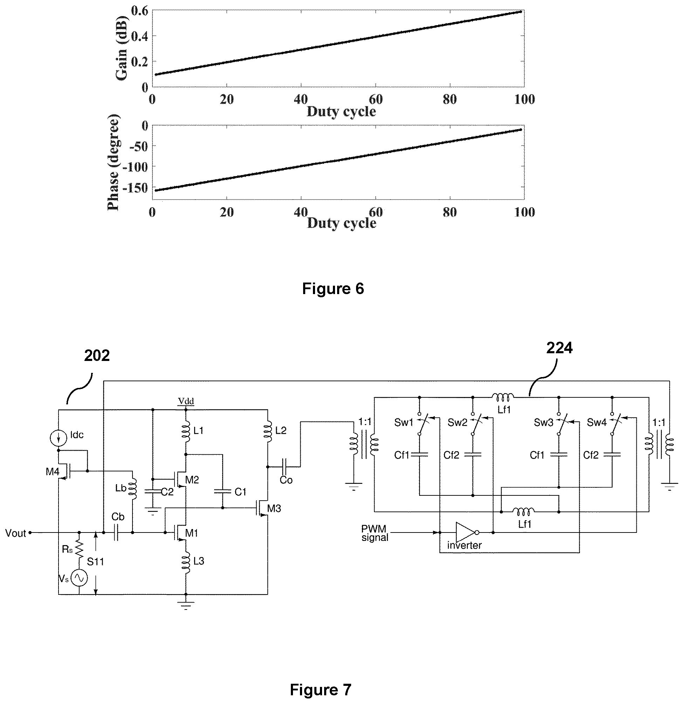

Again, referring to Figure 2, a circuit diagram of the active antenna 202 used in intermediate node 200 is described. As shown in Figure 2, when the amplified output is fed back to the active antenna 202, the reflection coefficient achieved is much higher than 1 (0dB). Thus, the transmitted signal power is much higher than received signal power. Details of the active antenna 202 are shown in Figure 7 and are discussed in later sections of the detailed description.

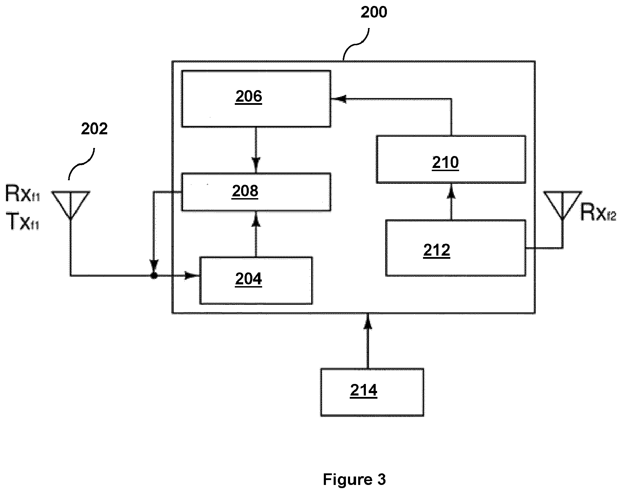

Now referring to Figure 3, a block diagram of the energy router 200 powered by battery 214 is described. The intermediate node 200 powered by the battery 214 comprises the active antenna 202, the phase shifter 208, the receiver unit 212, the accumulator 210, the Sigma-Delta Modulator (SDM 206), and the amplifier 204. The active antenna 202 in Figure 3 of the amplifier 204 and an antenna that receives the RF signal from the source node 400 and transmits the amplified phase shifted RF signal to the target node 300. Thus, the active antenna 202 acts as both receiver and transmitter.

The active antenna 202 is followed by the phase shifter 208. The active antenna 202 is configured for amplifying the RF signal for obtaining an amplified RF signal. The active antenna 202 receives the RF signal at the first frequency and transmits the amplified phase shifted signal to the target node 300 based on the input of the SDM 206.

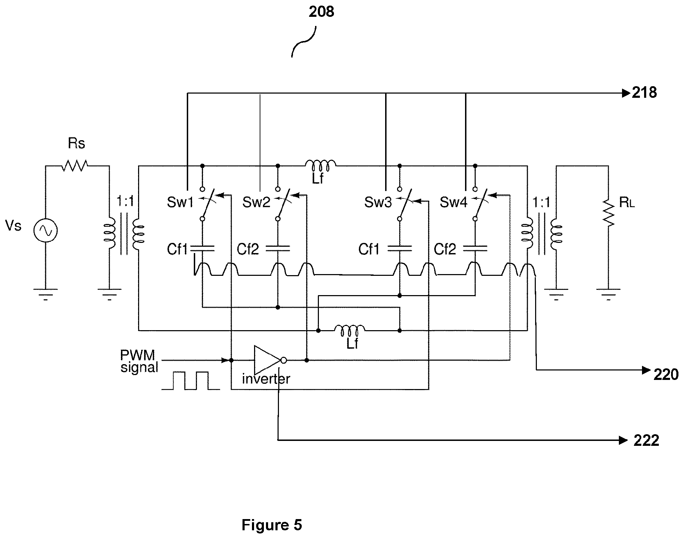

The phase shifter 208 is further configured for adjusting phase of the amplified signal for generating an amplified phase shifted RF signal. The amplified phase shifted RF signal is generated according to a feedback signal received from the target node 300. The phase shifter 208 is a digital phase shifter 208 and comprises a switched capacitor based all pass filter (not shown in Figure 3) and the details of the switched capacitor based all pass filter are described in Figure 5 and Figure 7.

The receiver unit 212 of the intermediate node 200 receives the feedback signal from the target node 300 at the second frequency to avoid interference with the RF signal generated at the first frequency. The receiver unit 212 is configured for decoding the digital signal transmitted from the target node 300. The receiver unit 212 sends the signal to the accumulator 210 after decoding.

In an exemplary embodiment, the first frequency is 2.4GHz and not limited to this and the second frequency is 915MHz or frequency selected from 900MHz band and not limited to this. The first frequency and the second frequency are selected in different range to avoid interference.

The accumulator 210 is configured for receiving the digital signal and generating an output signal. The output signal is generated according to a previous value of the output signal and the digital feedback signal received from the target node 300 with respect to one of an increase or decrease in energy harvested at the target node 300. The accumulator 210 modifies the output signal by increasing the previous value by 1 in case the digital signal is high and modifies the output signal by decreasing the previous value by 1 in case the digital signal is low. The accumulator 210 is followed by the SDM 206.

The SDM 206 is configured for receiving the output signal from the accumulator 210, which modulates the duty cycle of the Pulse Width Modulation (PWM) signal generated from SDM 206.

The transmitter is configured using the active antenna 202 for transmitting the amplified phase shifted RF signal to the target node 300 at the first frequency. The active antenna 202 is connected with the amplifier 204 is configured to receive and transmits the amplified phase shifted RF signal. As shown in Figure 3, the intermediate node 200 is powered by an external power supply comprises the battery 214.

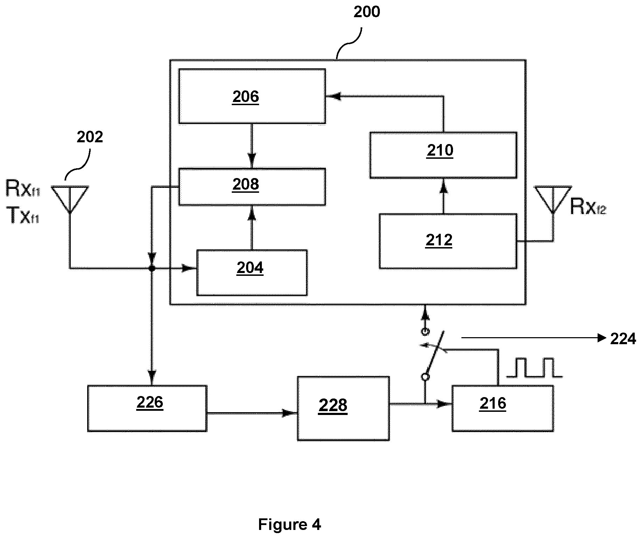

Now referring to Figure 4, a block diagram for the energy router 200 powered by the energy harvesting unit 226 is shown. The energy router 200 powered by the energy harvesting unit 226 comprises of the active antenna 202, the digital phase shifter 208, the receiver unit, the accumulator 210, the SDM 206, the energy harvesting unit 226, the energy storage unit 228 of the intermediate node 200 and the level detector 216. The active antenna 202 comprises of the amplifier 204 along with the antenna connected with the amplifier 204.

The energy harvesting unit 226 harvests energy from the signal transmitted from the source node 400 and power up the energy router 200. The energy storage unit 228 of the intermediate node 200 is configured to store the harvested energy and deliver to the remaining part of the node when required.

The level detector 216 is configured to detect the upper and lower threshold level of the stored energy. The level detector 216 generates the PWM signal to turn on and off the switch 224 connected between the energy storage unit 228 of the intermediate node 200 and power line of the remaining parts of the energy router 200. The amplifier 204, the phase shifter 208, the SDM 206, the accumulator 210 and the receiver unit 212 are turned on and turned off according to the PWM signal.

In an embodiment, a passive antenna followed by the amplifier 204 creates the active antenna 202 which amplifies the signals received by the active antenna 202. The passive antenna does not require additional power from external source. The active antenna 202 is designed by connecting the output of the amplifier 204 back to the input of the amplifier, where the passive antenna is connected.

In an embodiment, the signal received at the active antenna 202 is going to the amplifier 204 as well as the energy harvesting unit 226. The energy harvesting unit 226 continuously harvests energy, and the active antenna 202 transmits the amplified phase shifted signal only when the energy level of the energy storage unit 228 of the intermediate node 200 is above the lower threshold.

In an embodiment, referring to Figure 3 and Figure 4, the battery 214 needs to be replenished by removing it manually, when the intermediate node 200 is powered by the battery 214, whereas when the intermediate node 200 is powered by the energy harvesting unit 226, the battery of the energy storage unit 228 is replenished from the harvested RF energy. The energy router 200 shown in Figure 3 requires an external power supply, whereas the design in Figure 4 does not require any external power supply. Therefore, overall energy gain achieved in the energy router 200 powered by the energy harvesting unit 226 is higher than energy router 200 powered by the battery 214.

Referring now to Figure 5, an exemplary schematic diagram of the switched capacitor-based all-pass filter based phase shifter 208 is illustrated. In an exemplary embodiment, the switched capacitor-based phase shifter 208 comprises at least two identical capacitors 220, a set of three-terminal switches 218 and the inverter 222.

The inverter 222 is configured for inverting the PWM signal generated by the SDM 206 (shown in Figure 3, 4) for generating an inverted PWM signal. The PWM signal is transmitted to a set of switches 218 in capacitors 220 configured in the phase shifter 208. The inverted PWM signal is transmitted to another set of switches 218 in capacitors 220 configured in the phase shifter 208. Each of the PWM signal and the inverted PWM signal are transmitted for generating the amplified phase shifted RF signal. The active antenna 202 is configured to transfer the amplified RF signal in case energy stored in the energy unit of the RF powered intermediate node 200 is more than a threshold value. The amplifier 204 is configured to amplify the signal received at the active antenna 202.

The at least two identical capacitors 220 are connected in shunt at each of an input side of the shunt and an output side of the shunt. The set of three-terminal switches 218 is connected in series with the capacitors 220 to enable connection or disconnection of the capacitors 220 in the phase shifter 208 for generating the phase shifted RF signal. The phase shifter 208 adjusts the phase based on the feedback signal received from the target node 300.

The inverter 222 is configured for inverting the PWM signal generated by the SDM 206 (not shown in Figure 5) for generating the inverted PWM signal. The PWM signal is transmitted to the set of switches 218 in the capacitors 220 configured in the phase shifter 208. The inverted PWM signal is transmitted to another set of switches 218 in the capacitors 220 configured in the phase shifter 208. Each of the PWM signal and the inverted PWM signal are transmitted for generating the amplified phase shifted RF signal.

In an exemplary embodiment, the inverter 222 as shown in Figure 5 is used to invert the output of SDM 206. The PWM signal generated from SDM 206 is given to Sw1 and Sw3. The inverted PWM signal is given to Sw2 and Sw4. The phase of the signal can be changed by switching the capacitances on both the sides by applying PWM signals on the switches 218.

Referring now to Figure 6, a plot showing variation of gain and phase of the switched capacitor-based all-pass filter based phase shifter 208 (as shown in Figure 5) with change in duty cycle of the PWM signal applied at the switches 218 connected in series with the capacitors 220 is described. It has been observed that, the variation of magnitude is very small, whereas the phase changes significantly with duty cycle.

Referring now to Figure 7, an exemplary schematic diagram of the active antenna 202 followed by the all-pass filter based phase shifter 208 is shown. Capacitances of the all-pass filter based phase shifter 208 changes based on the duty cycle of the PWM signal applied at the switches 218. In an exemplary embodiment, the active antenna 202 is designed by using the two-stage amplifier 204. The output of the amplifier 204 is applied at the digital phase shifter 208 to adjust the phase of the amplified signal according to the feedback received from the target node 300. Magnitude of reflection coefficient (*S*₁₁) and input impedance (*Z*₁₁) of the intermediate node 200 at 2.4GHz is shown in Figure 8. It may be observed that the real value of *Z*₁₁ is -50.53 Ω and the gain of the active antenna 202 is a gain of 26dB at 2.4 GHz

Referring now to Figure 8, a plot showing magnitude and phase of reflection coefficient (*S*₁₁) and input impedance (*Z*₁₁) of the circuit given in Figure 6 is shown. Magnitude of reflection coefficient (*S*₁₁) and input impedance (*Z*₁₁) of the intermediate node 200 at 2.4GHz is shown in Fig. 8. It is observed that the real value of *Z*₁₁ is -50.53 Ω and the gain of the active antenna 202 is a gain of 26dB at 2.4 GHz.

Referring now to Figure 9, an exemplary schematic diagram of the target node 300 is described. The target node 300 comprises of a energy harvesting unit 302 of the target node 300, a energy storage unit 304 of the target node 300, a sensing unit 306, a comparator 308 and a transmitter unit 310. The energy harvesting unit 302 of the target node 300 is the RF energy harvesting unit 302. The energy harvesting unit 302 of the target node 300 configured for harvesting energy in the target node 300 from the RF signal received from the source node 400 and the amplified phase shifted RF signal received from the intermediate node 200 at the first frequency. The sensing unit 306 is powered by the energy stored in the energy storage unit 302, which consists of a rechargeable battery. The comparator 308 configured to compare the harvested energy with previously generated harvested energy at the target node 300. The transmitter unit 310 is operated at the second frequency and configured for transmitting an output of the comparator 308 as the feedback signal to the receiver unit 212 of the energy router 200.

The transmitter unit 310 of the target node 300 transmits a one-bit (0/1) signal based on the increase/decrease in the harvested energy. Based on the output signal, the accumulator 210 of the intermediate node 200 either increases or decreases the input to the SDM 206, which changes the duty cycle of PWM signal applied at the switches 218 connected to the capacitors 220 (as shown in Fig. 5) of the digital phase shifter 208. When the duty cycle changes, the equivalent capacitance in both the sides of the all-pass filter based digital phase shifter 208 changes, which changes the phase of the signal.

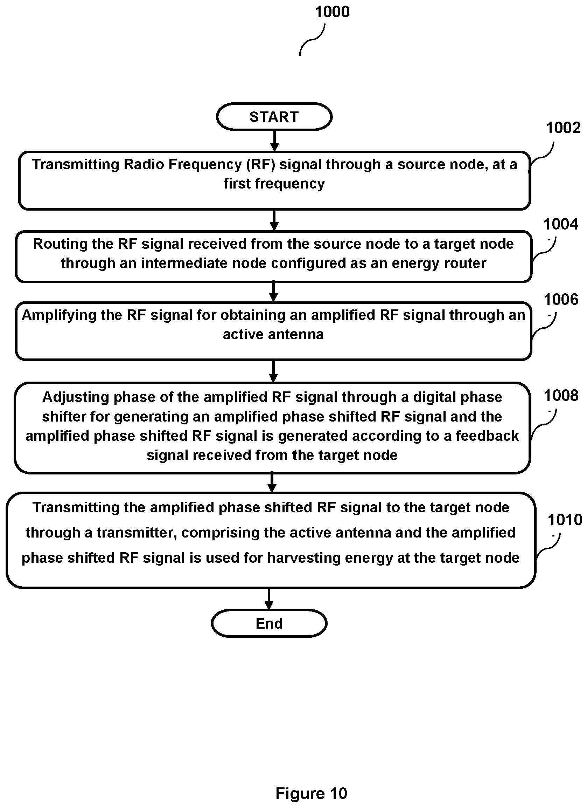

Referring now to Figure 10, the method 1000 for optimizing energy transmission through the system 100 is shown.

As part of the method 1000, at step 1002, the method 1000 provides transmitting RF signal through the source node 400, at the first frequency for obtaining energy transmission.

At step 1004, the method 1000 includes routing the RF signal received from the source node 400 to a target node 300 through the intermediate node 200. The intermediate node 200 is configured as the energy router 200.

At step 1006, the method 1000 includes amplifying the RF signal through the active antenna 202 for obtaining an amplified RF signal.

At step 1008, the method 1000 includes adjusting phase of the amplified RF signal through the digital phase shifter 208 for generating an amplified phase shifted RF signal. The amplified phase shifted RF signal is generated according to the feedback signal received from the target node 300.

At step 1010, the method 1000 includes transmitting the amplified phase shifted RF signal to the target node 300 through the transmitter comprising the active antenna 202. The amplified phase shifted RF signal is used for harvesting energy at the target node 300.

The order in which the method 1000 is described is not intended to be construed as a limitation, and any number of the described method blocks can be combined in any order to implement the method 200 or alternate methods. Additionally, individual blocks may be deleted from the method 200 without departing from the scope of the subject matter described herein.

In an embodiment, the method 1000, includes receiving the RF signal generated from the source node 400 through the active antenna 202, at the first frequency. The active 202 transmits the amplified phase shifted signal to the target node 300. The receiver unit 212 receives the feedback signal at the second frequency from the target node 300. After getting the feedback signal, the receiver unit 212 decodes the feedback signal for obtaining the digital signal (1/0). The accumulator 210 pass the digital signal for generating an output signal. The output signal is generated according to the previous value of the output signal and the feedback signal received from the target node 300 with respect to one of an increase or decrease in energy harvested at the target node 300. The SDM 206 receives the output signal and generates a PWM signal whose duty cycle is modulated according to the output of the accumulator 210.

In an embodiment, the method 1000 includes inverting the PWM signal generated by the SDM 206 through the inverter 222 for generating the inverted PWM signal. The PWM signal is transmitted to the set of switches 218 in capacitors 220 configured in the phase shifter 208 and the inverted PWM signal is transmitted to another set of switches 218 in capacitors 220 configured in the phase shifter 208. Each of the PWM signal and the inverted PWM signal are transmitted for generating the amplified phase shifted RF signal, and wherein the antenna 202 is configured to transfer the amplified RF signal in case energy stored in an energy unit of the RF powered intermediate node 200 is more than a threshold value.

Exemplary embodiments discussed above may provide certain advantages. Though not required to practice aspects of the disclosure, the advantages may include those provided by the following features.

Some embodiments of the method 1000 and the system 100 may increase the energy replenishment efficiency of wireless sensor nodes. Signals transmitted from multiple primary energy source and the energy routers 200 or intermediate nodes 200 (acting as secondary energy sources) can combine at the target node 300 in a constructive manner to increase the power of the resultant signal. The intermediate node 200 /secondary energy sources can act as energy router 200 for the target sensor node equipped with RF energy harvesting unit 226 at the receiving end.

Some embodiments of the method 1000 and the system 100 uses the low-power active antenna-based energy router design for multi-hop RFET.

The proposed method 1000 and system100 is applicable to energy routing beyond two hops and for cooperative RF energy transfer from multiple energy sources to a receiver node.

Some embodiments of the method 1000 and the system 100 are cost effective.

Many modifications and variations of the present invention are possible in light of the above teachings. It is therefore to be understood that within the scope of the appended claims the invention may be practiced otherwise than as specifically described.

## Claims

1. A system (100) for optimizing energy transmission, the system comprising:
a source node (400) configured for transmitting Radio Frequency (RF) signal at a first frequency;
an intermediate node (200) for routing the RF signal received from the source node (400) to a target node (300), wherein the intermediate nodes (200) comprising:
an active antenna (202) configured for amplifying the RF signal for obtaining an amplified RF signal;
a digital phase shifter (208) configured for adjusting phase of the amplified signal for generating an amplified phase shifted RF signal, wherein the amplified phase shifted RF signal is generated according to a feedback signal received from the target node (300); and
a transmitter configured using the active (202) for transmitting the amplified phase shifted RF signal to the target node (300);
wherein the target node (300) is configured for harvesting energy from each of the RF signals received from the source node (400) and the amplified phase shifted RF signal received from the intermediate node (200)

2. The system (100) as claimed in claim 1, wherein the intermediate node (200) comprising:
the active antenna (202) for receiving the RF signal at the first frequency and transmitting the amplified phase shifted signal to the target node (300);
a receiver unit (212) for receiving the feedback signal from the target node (300) at a second frequency, wherein the receiver unit (212) is configured for decoding the feedback signal transmitted from the target node (300);
an accumulator (210) configured for receiving the feedback signal and generating an output signal, wherein the output signal is generated according to the previous value of the output signal and the feedback signal received from the target node (300) with respect to one of an increase or decrease in energy harvested at the target node (300);
a Sigma-Delta Modulator (SDM) (206) for receiving the output signal, wherein the output signal modulates duty cycle of the SDM (206) for generating a Pulse Width Modulation (PWM) signal; and
an inverter (222) for inverting the PWM signal generated by the SDM (206) for generating an inverted PWM signal, wherein the PWM signal is transmitted to a set of switches (218) in capacitors (220) configured in the phase shifter (208), and wherein the inverted PWM signal is transmitted to another set of switches (218) in capacitors (220) configured in the phase shifter (208), wherein each of the PWM signal and the inverted PWM signal are transmitted for generating the amplified phase shifted RF signal, and wherein the active antenna (202) is configured to transfer the amplified RF signal in case energy stored in the energy unit of the intermediate node (200) is more than a threshold value.

3. The system (100) as claimed in claim 2, wherein the accumulator (210) is configured for:
modifying the output signal by increasing the previous value by 1, in case the digital signal is high; and
modifying the output signal by decreasing the previous value by 1, in case the digital signal is low.

4. The system (100) as claimed in claim 1, wherein the phase shifter (208) comprises a switched capacitor based all pass filter, comprising:
at least two identical capacitors (220) connected in shunt at each of an input side of the shunt and an output side of the shunt; and
a set of three-terminal switches (218) connected in series with the capacitors (220) to enable connection or disconnection of the capacitors (220) in the phase shifter (208) for generating the phase shifted RF signal, wherein the phase shifter (208) adjusts the phase based on the feedback signal received from the target node (300).

5. The system (100) as claimed in claim 1, wherein the target node (300) comprises:
an energy harvesting unit (302) configured for harvesting energy in the target node (300) by using the RF signal received from the source node (400) and the amplified phase shifted RF signal received from the intermediate node (200) at the first frequency;
a sensing unit (306) powered by the energy harvested by the energy harvesting unit (302).
a comparator (308) configured to compare the harvested energy with previously generated harvested energy at the target node (300); and
a transmitter, operating at a second frequency, configured for:
transmitting an output of the comparator (308) as the feedback signal to the intermediate node (200).

6. A method (1000) for optimizing energy transmission, the method (1000) comprising:
transmitting, through a source node (400), Radio Frequency (RF) signal at a first frequency;
routing, through an intermediate node (200) configured as an energy router, the RF signal received from the source node (400) to a target node (300), wherein the routing comprising:
amplifying, through an active antenna (202), the RF signal for obtaining an amplified RF signal;
adjusting, through a digital phase shifter (208), phase of the amplified RF signal for generating an amplified phase shifted RF signal, wherein the amplified phase shifted RF signal is generated according to a feedback signal received from the target node (300); and
transmitting, through a transmitter, comprising the active antenna (202), the amplified phase shifted RF signal to the target node (300);
wherein the amplified phase shifted RF signal is used for harvesting energy at the target node (300).

7. The method (1000) as claimed in claim 6, comprising:
receiving, through an active antenna (202), the RF signal generated from the source node (400) at a first frequency;
transmitting, through the active antenna (202), the amplified phase shifted signal to the target node (300);
receiving, through a receiver unit, the RF signal as the feedback signal at a second frequency from the target node (300);
decoding, by the receiver unit, the feedback signal for obtaining a digital signal;
passing, through an accumulator (210), the digital signal for generating an output signal, wherein the output signal is generated according to the previous value of the output signal and the feedback signal received from the target node (300) with respect to one of an increase or decrease in energy harvested at the target node (300);
receiving, by the Sigma-Delta Modulator (SDM) (206), the output signal, wherein the output signal modulates duty cycle of the SDM (206) for generating a Pulse Width Modulation (PWM) signal; and
inverting, through an inverter (222), the PWM signal generated by the SDM (206) for generating an inverted PWM signal, wherein the PWM signal is transmitted to a set of switches (218) in capacitors (220) configured in the phase shifter (208), and wherein the inverted PWM signal is transmitted to another set of switches (218) in capacitors (220) configured in the phase shifter (208), wherein each of the PWM signal and the inverted PWM signal are transmitted for generating the amplified phase shifted RF signal, and wherein the active antenna (202) is configured to transfer the amplified RF signal in case energy stored in an energy unit of the RF powered intermediate node (200) is more than a threshold value.

8. The method (1000) as claimed in claim 7, comprising:
modifying the output signal by increasing the previous value by 1, in case the digital signal is high; and
modifying the output signal by decreasing the previous value by 1, in case the digital signal is low.

9. The method (1000) as claimed in claim 6, comprising:
configuring, at least two identical capacitors (220) connected in shunt at each of an input side of the shunt and an output side of the shunt; and
enabling, through a set three-terminal switches (218) in series with the capacitors (220), connection or disconnection of the capacitors (220) in the phase shifter (208) for generating the phase shifted RF signal, wherein the phase shifter (208) adjusts the phase based on the feedback signal received from the target node (300).

10. The method (1000) as claimed in claim 6, wherein the harvesting of the energy at the target node (300) comprises:
receiving, through the active antenna (202), the RF signal from the source node (400) and the amplified phase shifted RF signal from the intermediate node (200) at a first frequency;
harvesting, through an target node energy harvesting unit (302), energy in the target node (300) by using the RF signal received from the source node (400) and the amplified phase shifted RF signal received from the intermediate node (200), wherein the harvested energy is used for powering sensing unit (306) in the target node (300);
comparing, through a comparator (308) at the target node (300), the harvested energy with previously generated harvested energy at the target node (300); and
transmitting, through a transmitter at the target node (300), an output of the comparator (308) as the feedback signal at a second frequency to the intermediate node (200).

11. An energy router for optimizing energy transmission, the energy router comprising:
an intermediate node (200) powered by either a battery (214) or an RF energy harvester (302), wherein the intermediate node (200) comprising;
an active antenna (202) configured for receiving RF signal form a source node (400), amplifying the RF signal for obtaining an amplified RF signal;
a digital phase shifter (208) configured for adjusting phase of the amplified signal for generating an amplified phase shifted RF signal, wherein the amplified phase shifted RF signal is generated according to a feedback signal received from the target node (300); and
a transmitter comprising the active antenna (202) configured for transmitting the amplified phase shifted RF signal to a target node (300);
wherein the target node (300) is configured for harvesting energy from each of the RF signals received from the source node (400) and the amplified phase shifted RF signal received from the intermediate node (200).

12. The energy router as claimed in claim 11, wherein the intermediate node (200) comprising:
the receiver unit (212) for receiving the RF signal at a second frequency from the target node (300), wherein the receiver unit (212) is configured for decoding the RF signal for obtaining the digital feedback signal;
an accumulator (210) configured for receiving the digital signal and generating an output signal, wherein the output signal is generated according to the previous value of the output signal and the feedback signal received from the target node (300) with respect to one of an increase or decrease in energy harvested at the target node (300);
a Sigma-Delta Modulator (SDM) (206) for receiving the output signal, wherein the output signal modulates duty cycle of the SDM (206) for generating a Pulse Width Modulation (PWM) signal; and
an inverter (222) for inverting the PWM signal generated by the SDM (206) for generating an inverted PWM signal, wherein the PWM signal is transmitted to a set of switches (218) in capacitors (220) configured in the phase shifter (208), and wherein the inverted PWM signal is transmitted to another set of switches (218) in capacitors (220) configured in the phase shifter (208), wherein each of the PWM signal and the inverted PWM signal are transmitted for generating the amplified phase shifted RF signal, and wherein the active antenna (202) is configured to transfer the amplified RF signal in case energy stored in an energy unit of the RF powered energy router is more than a threshold value.

13. The energy router as claimed in claim 12, wherein the accumulator (210) is configured for:
modifying the output signal by increasing the previous value by 1, in case the digital signal is high; and
modifying the output signal by decreasing the previous value by 1, in case the digital signal is low.

14. The energy router as claimed in claim 11, wherein the digital phase shifter (208) comprises a switched capacitor based all pass filter, comprising:
at least two identical capacitors (220) connected in shunt at each of an input side of the shunt and an output side of the shunt; and
a set of three-terminal switches (218) connected in series with the capacitors (220) to enable connection or disconnection of the capacitors (220) in the phase shifter (208) for generating the phase shifted RF signal, wherein the phase shifter (208) adjusts the phase based on the feedback signal received from the target node (300).
